# EUROPEAN PATENT APPLICATION

(11) **EP 4 521 573 A1**
(43) Date of publication of application: **12.03.2025**
(21) Application number: 23799661.6
(22) Date of filing: 03.05.2023
(51) Int. Cl.: H02G 5/08

(54) **BUS DUCT BRANCHING BOX AND BUS DUCT SYSTEM HAVING SAME**

(30) Priority: 04.05.2022 KR 20220055674; 02.05.2023 KR 20230056850
(71) Applicant: LS Cable & System Ltd., Anyang-si, Gyeonggi-do 14119 (KR)
(72) Inventor: JEONG, Geun Young, Daegu 41437 (KR); LEE, Min Woo, Anyang-si Gyeonggi-do 13994 (KR); KIM, Soo Gwan, Daegu 41560 (KR); KIM, Won Seok, Gumi-si Gyeongsangbuk-do 39160 (KR)
(74) Representative: K&L Gates LLP
(86) International application number: PCT/KR2023/006001
(87) International publication number: WO 2023/214780

(57) **Abstract**

The present invention relates to: a bus duct branching box for power branching, by which the workability of a mounting operation for mounting the branching box to a bus duct installed in a data center, etc. to supply power to a power demand equipment such as a data server, or a separation operation for separating the branching box can be improved, and a mounting state of the branching box can be stably maintained; and a bus duct system having the branching box.

## Description

### [Technical Field]

The present invention relates to a bus duct branching box and a bus duct system having the same. The present invention relates to a bus duct branching box and a bus duct system having the same, in which the workability of a mounting operation to mount a branching box (Busduct Branching Box: Busduct Plug in Unit) for power branching in a bus duct for supplying power to power demand equipment such as a data server installed in a data center and the like is improved, and a mounting state of the branching box may be stably maintained.

### [Background Art]

As the spread and usage of Internet have expanded recently, the number of Internet data centers (IDCs) has increased, and their scale has also grown.

These Internet data centers serve as spaces where the maintenance of data servers and the like is continuously carried out, and their data consumption is incomparably greater than that of typical office buildings.

In addition, the relocation, replacement, or expansion operations of data servers and the like occurs frequently, and during such operations, the construction of power lines to supply power to each data server is essentially involved.

In conventional systems, a technology has been used where a bus duct is applied to the building itself, connecting the bus duct to a specific area. A branching box is mounted on the bus duct, and multiple power cables, etc. branched through the branching box are disposed through the floor of the server space, etc. connecting to power-demand facilities such as data servers to supply power.

However, in cases of relocating or newly installing data servers, the workability of modifying or adding power cable connection positions is not efficient. Additionally, multiple power cables are arranged on the floor and other areas, occupying space and potentially becoming factors that hinder space utilization and aesthetics.

Moreover, this bus duct system is often installed across the upper space of the data server room to secure installation space for computer room facilities such as data servers and minimize interference with the facilities. A system where, depending on the location of the computer room facilities, workers install a branching box on a nearby bus duct and connect the branching box to power-demand facilities using branched cables is widely used.

In addition, the bus duct may be mounted either horizontally in the upper space of the computer room or vertically, depending on the computer room's layout. In any case, the branching box mounted to the bus duct needs to remain in a stably mounted state to prevent any risk of falling.

Further, depending on the relocation or new installation of power-demand facilities such as data servers, workers frequently perform tasks to change the position of the branching box or install new ones. Typically, such tasks involve workers accessing the underside of the bus duct using ladders or similar tools to attach, detach, or move the branching box. During this process, preventing the box from falling and using additional tools is not easy. Therefore, the attachment and detachment of the branching box on the bus duct should be designed to maximize workability without requiring the use of tools.

### [Disclosure]

### [Technical Problem]

The present invention is directed to providing a bus duct branching box and a bus duct system having the same, in which the workability of a mounting operation to mount a branching box for power branching in a bus duct for supplying power to power demand equipment such as a data server installed in a data center and the like is improved, and a mounting state of the branching box may be stably maintained.

### [Technical Solution]

To solve the aforementioned objects, the present invention is directed to providing a bus duct branching box mounted on a bus duct, including an enclosure provided with guide rails on both sides and a plurality of busbars for supplying power, the bus duct branching box including: a housing; a plurality of connecting conductors each connected to the plurality of busbars and formed exposed on a mounting surface of the housing; at least one plug connection unit configured to branch power supplied through the connecting conductors; and a plurality of locking units provided to mount or detach the bus duct branching box to or from the bus duct, which are able to change the bus duct branching box to a state of being mountable to or detachable from the bus duct, and which are configured to operate to move while being pressed by the guide rails during a process of mounting or detaching the bus duct branching box to or from the bus duct and to be returned to an original position upon completion of mounting or detaching the bus duct branching box to or from the bus duct.

In addition, the locking unit may operate to move or be returned to an original position by an elastic member.

Further, the locking unit may include a locking wheel configured to change the bus duct branching box to a state of being mountable to or detachable from the bus duct through a rotational motion, and a locking member formed on one side of the locking wheel and selectively hung in and fixed to an outer end of the guide rail of the bus duct enclosure.

Here, the locking unit may include an indicator through which the mountable state or the detachable state may be identified.

In this case, the locking member may be fixed to the locking wheel so as to be displaced or rotated along with the locking wheel when the locking wheel is displaced or rotated.

Further, the indicator may be configured in the form of protruding from an outer circumferential surface of the locking wheel.

In addition, a pair of partition walls to which the locking unit is mounted and which are formed perpendicular to the mounting surface of the housing may be provided spaced apart parallel to each other.

Further, the mountable state or the detachable state may be identified depending on a direction of the indicator of the locking unit mounted on each partition wall of the pair of partition walls.

Here, the locking wheel may be mounted on an outer circumferential surface of the partition wall, and the locking member may be formed protruding from one side of the locking wheel and formed to be advanceable into and retractable from a through hole formed in the partition wall.

In this case, a spacing distance of the pair of partition walls may have a size corresponding to a width of the bus duct.

Further, the locking unit may be mounted to the partition wall so as to be elastically supported in a direction of an outer circumferential surface of the partition wall via an elastic member.

In addition, an inclined surface inclined in a specific direction with respect to a rotation axis of the locking wheel may be provided at an outer end of the locking member, and the locking member may be selectively hung in and fixed to an outer end of the guide rail depending on a direction of the inclined surface of the outer end of the locking member.

Further, an outer circumferential surface of the outer end of the locking member may be configured to be curved surface.

Here, a state in which the bus duct branching box is hung in and fixed to the outer end of the guide rail may be maintained in a state in which the inclined surface of the outer end of the locking member is disposed in a direction facing away from the outer end of the guide rail.

In this case, the bus duct branching box may be drawn downward in a state in which the inclined surface of the outer end of the locking member is disposed in a direction facing the outer end of the guide rail, the locking wheel may move in a direction away from an outer surface of the partition wall while the inclined surface of the outer end of the locking member is pressed by the outer end of the guide rail, and a state in which the locking member is hung in and fixed to the outer end of the guide rail may be released so that the bus duct branching box is detachable from the bus duct.

Further, the connecting conductor may be configured as a plurality of plate-shaped conductors formed to protrude parallel from the mounting surface of the housing that constitutes the bus duct branching box.

In addition, to solve the aforementioned object, the present invention is directed to providing a bus duct branching box mounted on a bus duct, including an enclosure provided with guide rails on both sides and a plurality of busbars for supplying power, the bus duct branching box including: a housing; a plurality of connecting conductors each connected to the plurality of busbars and formed exposed on a mounting surface of the housing; at least one plug connection unit configured to branch power supplied through the connecting conductors; and a plurality of locking units configured to mount or detach the bus duct branching box to or from the bus duct, wherein the plurality of locking units includes: a locking wheel configured to change the bus duct branching box to a state of being mountable to or detachable from the bus duct through a rotational motion; and a locking member formed on one side of the locking wheel and selectively hung in and fixed to an outer end of the guide rail of the bus duct enclosure.

In addition, to solve the aforementioned objects, the present invention is directed to providing a bus duct system including: a bus duct provided with an enclosure having hook-shaped guide rails on both sides, a plurality of busbars for supplying phase-based power, and a connection surface on which a connection opening into which a plurality of connecting conductors are insertable is formed on one side of the enclosure; and the above-described bus duct branching box , attachably/detachably mounted to the connection surface of the bus duct.

### [Advantageous Effects]

The bus duct branching box and the bus duct system having the same, according to the present invention, can be installed in a data center and the like to supply power to a data server and the like, and conveniently install a branching box for branching at the required locations to supply power to power demand equipment.

In addition, according to the bus duct branching box and the bus duct system having the same of the present invention, no additional fastening members or work tools are required for mounting the branching box to the bus duct. When mounting the branching box to the bus duct, the mounting may be completed simply by an operation of pushing and attaching the branching box onto the bus duct. Even when detaching the branching box from the bus duct while the branching box is in a state of being mounted to the bus duct, the mounting and detachment of the branching box can be achieved with only the rotational motion of the locking unit provided on the branching box, thereby significantly improving the workability of installing, relocating, and detaching the branching box for power branching of the bus duct.

Further, according to the bus duct branching box and the bus duct system having the same of the present invention, by providing an indicator on the locking unit, it can be easily identified from the outside whether the branching box is in a mountable or detachable state, thereby enhancing the operator's work convenience and preventing safety accidents.

Furthermore, according to the bus duct branching box and the bus duct system having the same of the present invention, the mounting state can be sequentially released by multiple locking units, thereby preventing safety accidents such as the falling of the branching box that may occur when the branching box is detached all at once.

### [Description of Drawings]

FIG. 1 illustrates a schematic view of a bus duct system according to the present invention.
FIG. 2 illustrates a pair of bus ducts and a connection kit that constitute a bus duct system according to the present invention, and FIG. 3 illustrates a pair of bus ducts and a connection kit that constitute a bus duct system according to the present invention, and illustrates a state in which a connection between the pair of bus ducts has been completed via the connection kit.
FIG. 4 illustrates a cross-sectional view of an embodiment of a bus duct, according to the present invention.
FIG. 5 illustrates a cross-sectional view of another embodiment of a bus duct, according to the present invention.
FIG. 6 illustrates a state immediately before a branching box is mounted on a bus duct mounting surface, according to the present invention.
FIG. 7 illustrates a process in which a branching box is mounted to a bus duct mounting surface, according to the present invention.
FIG. 8 illustrates a state in which a branching box has been completed mounted to a bus duct mounting surface, according to the present invention.
FIGS. 9 to 11 are side views of a sequential operational state of a locking unit in a process in which a branching box is mounted on a bus duct mounting surface, according to the present invention.
FIG. 12 illustrates a state in which a branching box is detachable by rotating a locking unit of the branching box to detach the branching box while the branching box is mounted on the bus duct mounting surface, according to the present invention.
FIG. 13 illustrates a process in which a branching box is detached from a bus duct mounting surface, according to the present invention.
FIG. 14 illustrates a state in which a branching box has been completed disconnected from a bus duct mounting surface, according to the present invention.
FIGS. 15 to 17 illustrate side views of an operational state of a locking unit in a process in which a branching box is detached from a bus duct mounting surface, according to the present invention.

### [Mode for Disclosure]

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

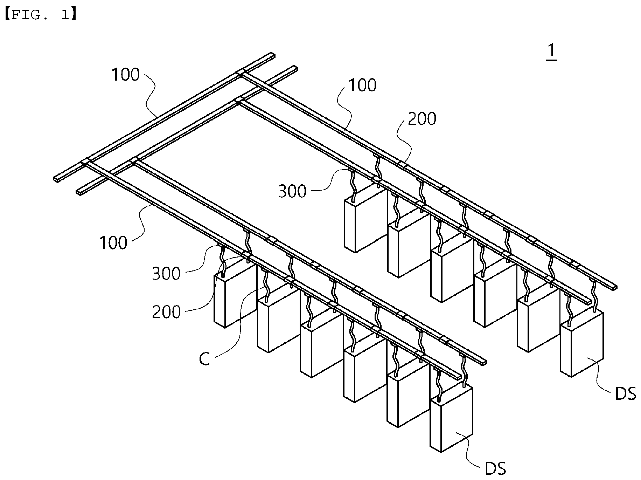

FIG. 1 illustrates a schematic view of a bus duct system 1 according to the present invention.

The bus duct system 1 according to the present invention may be a power system installed in an Internet data center (IDC) and the like.

The bus duct system 1 according to the present invention may be mounted on the ceiling or the like of a server installation space of the data center, and may be connected to a plurality of bus ducts 100 with a connection kit 200 to build a power network to reach a required location in the server installation space.

The power network and the data server (DS) and the like are not directly connected through the bus duct system 1, but may be connected through a power cable provided with a plug.

Therefore, when supplying power to a specific server, the power may be supplied by connecting a plug of the power cable to a nearest branching box 300 among the branching boxes mounted to the bus duct 100.

In addition, the bus duct 100 and the bus duct system 1 provided with the bus duct 100 according to the present invention allow connection at any required location without restriction of the location at which the bus duct 100 and the branching box 300 are connected. Accordingly, a length of the power cable connecting the branching box 300 and the server, etc., which is power demand equipment, may be minimized, and the position of the branching box 300 may be easily changed as necessary.

In order to easily change the connection position of the branching box 300 on the bus duct 100 as needed, a structure of the bus duct 100 needs to allow for the connecting conductor 330 of the branching box 300 to be connected regardless of the position, ensuring easy connection and maintaining connection reliability once connected.

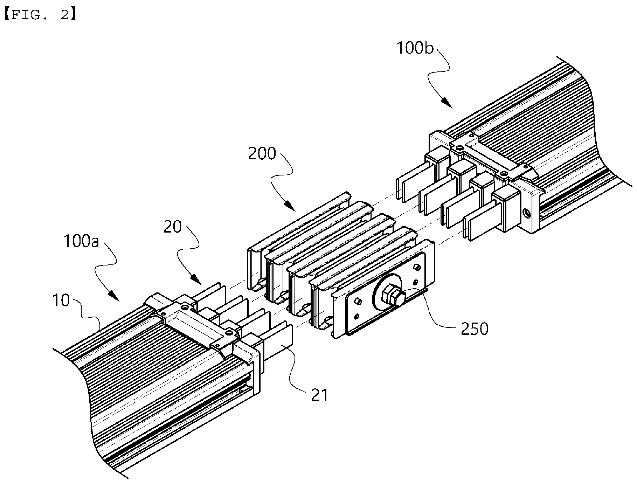

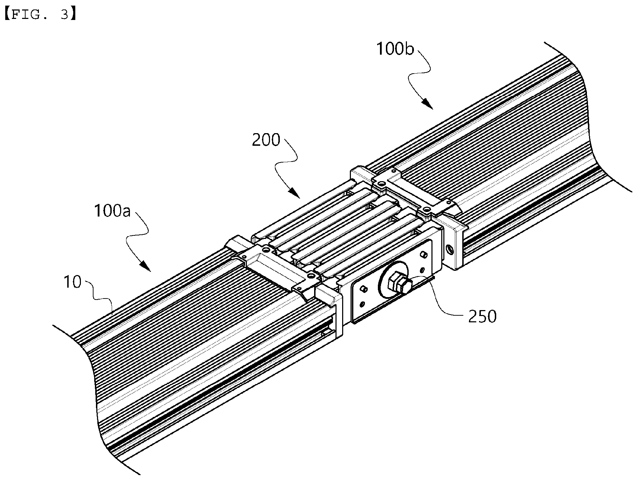

FIG. 2 illustrates a pair of bus ducts 100 and the connection kit 200 that constitute the bus duct system 1 according to the present invention, and FIG. 3 illustrates the pair of bus ducts 100 and the connection kit 200 that constitute the bus duct system 1 according to the present invention, and illustrates a state in which a connection between the pair of bus ducts 100 has been completed via the connection kit 200.

As illustrated in FIGS. 2 and 3, a bus ducts 100a or 100b for power supply may be manufactured in unit lengths and connected via the connection kit 200. Therefore, the bus duct 100a or 100b has a structure that enables connection to the connection kit 200 at both ends.

The bus duct 100a or 100b illustrated in FIGS. 2 and 3 may be configured to include a plurality of busbars 20 disposed in parallel and an enclosure 10 that receives the busbars 20, and an end of the busbars 20 that is exposed outside the enclosure 10 may constitute a connection portion.

The busbar 20 may be made of a conductor 21, such as copper or aluminum, and is received and protected inside the enclosure 10, isolated from the outside.

The connection kit 200 may be provided with an electrically conductive plate (not illustrated) for electrically connecting to the phase-based busbars 20 of each bus duct 100 to electrically conduct the phase-based busbars 20 in a mutually isolated state, thereby serving as a connection means for connecting the bus ducts 100.

Further, the busbar 20 constituting the bus duct 100a or 100b of the present invention may be configured as a pair of phase-based conductors 21 in which an elastic contact member described below is mounted to be interposed therebetween and a plate-shaped connecting conductor 330 of the branching box 300 described below is inserted and mounted therebetween.

Therefore, the electrically conductive plate of the connection kit 200 and the connecting conductor 330 of the branching box 300 described below may be configured as a plate-shaped conductor that is inserted between the pair of conductors 21 that constitute the phase-based busbar 20 of the bus duct 100.

Further, as illustrated in FIG. 3, when the pair of bus ducts 100a and 100b are connected via the connection kit 200, the lengthwise connection of the bus ducts 100 may be completed by tightening a fastening bolt 250 that constitutes the connection kit 200 to increase the power transmission length.

That is, the pair of bus ducts 100a and 100b may be interconnected in the lengthwise direction by the connection kit 200 illustrated in FIGS. 2 and 3 to extend the length thereof.

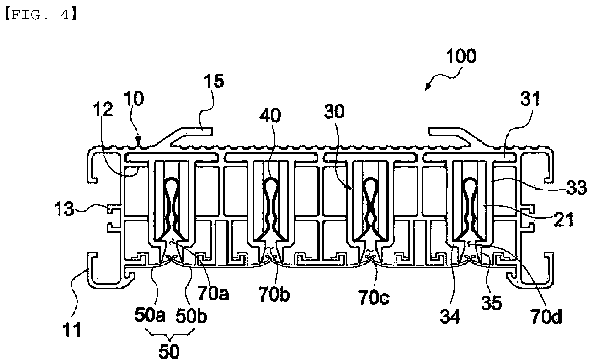

FIG. 4 illustrates a cross-sectional view of an embodiment of the bus duct 100, according to the present invention.

The bus duct 100 according to the present invention may include: an enclosure 10 made of metal; a plurality of busbars 20 configured as a pair of conductors 21 disposed spaced apart in parallel in a lengthwise direction of the enclosure 10; an insulating member 30 for mounting the conductors 21 constituting the plurality of busbars 20 within the enclosure 10 in an insulated state; a plurality of elastic contact members 40 each mounted between each pair of conductors 21 received in the insulating member 30; and a cover member 50 mounted to a lower portion of the enclosure 10 to block exposure of the busbar 20 and the elastic contact members, in which a plurality of connection openings 70 are provided spaced apart in a width direction of the enclosure 10 such that the connecting conductor 330 of the branching box 300 for power branching is inserted into and connected to the elastic contact member 40.

The bus duct 100 illustrated in FIG. 4 shows an example in which four busbars 20 are provided for supplying power in R, S, T, and N phases, and four connection openings 70a, 70b, 70c, and 70d are provided at a lower portion of the bus duct 100 such that the connecting conductor 330 of the branching box 300 for power branching is inserted into an inner side of the elastic contact member 40 to be connected. However, the number of busbars 20 may be provided such that three busbars 20 are provided for supplying power in R, S, and T phases or five busbars 20 are provided for supplying power in R, S, T, N, and N phases, and the number of connection openings 70 may be increased or decreased accordingly.

The busbar 20 constituting the bus duct 100 according to the present invention may be configured as a pair of conductors 21 disposed spaced apart in parallel as described above. The elastic contact member 40 may be provided between the pair of conductors 21 constituting the busbar 20 in each phase to improve reliability of electrical connection between the connecting conductor 330 and the busbar 20 upon connection of the connecting conductor 330 of the branching box 300.

The enclosure 10 constituting the bus duct 100 is made of a metal material, such as aluminum, and may be provided with the insulating member 30 for mounting the conductors 21 constituting the busbar 20 in an insulated state inside the enclosure 10.

The side of the enclosure may be provided with a cable seating portion 13 for mounting communication or control cables, a guide rail 11 for mounting the branching box described below, and a mounting slot 15 for being mounted to a ceiling structure and the like in a bus duct installation space.

As illustrated in FIG. 4, the insulating member 30 is provided with a fixing portion 31 that is inserted and mounted in an insertion slot formed in the enclosure 10, a mounting portion 33 branching downward from the fixing portion 31 to which the pair of busbars 20 with the elastic contact member 40 interposed therein are mounted, and an insertion portion 35 provided at a lower end of the mounting portion 33 into which the connecting conductor 330 of the branching box 300 is inserted while supporting a lower end of the busbar 20 mounted on the mounting portion 33.

The fixing portion 31 may be configured in the form of a plate disposed horizontally in a configuration that is inserted and mounted in the insertion slot formed inside the enclosure 10.

The mounting portion 33 branches in two downward from the fixing portion 31 so that the pair of conductors 21 constituting the busbar 20 may be mounted therein so as to be spaced apart and parallel to each other. The cross-sectional shape of the insulating member 30 may be configured overall in a "π" shape due to the shape of the fixing portion 31 and the mounting portion 33.

Further, as illustrated in FIG. 4, a step 34 is formed at the boundary of the pair of mounting portion 33 and insertion portion 35 branched from the fixing portion 31 in the insulating member 30, allowing lower ends of the pair of conductors 21 constituting the busbar 20 mounted on the mounting portion 33 to be supported respectively.

The elastic contact member 40 may be provided between the pair of conductors 21 constituting the phase-based busbar 20. The elastic contact member 40 is configured to be mounted between the conductors 21 constituting the busbar 20 and connected to the connecting conductor 330 of the branching box 300.

The cross-sectional shape of the elastic contact member 40 may be configured to extend near the insertion portion 35 of the insulating member 30 in a way that connects the lower ends of the pair of conductors 21 that constitute the busbar 20, and first narrow in width toward the inside and then widen again.

In addition, as described below, the elastic contact member 40 may be provided with at least one bent portion such that there is a plurality of contacts between the elastic contact member 40 and the connecting conductor 330 of the branching box 300 in a state in which the connecting conductor 330 of the branching box 300 is inserted.

Further, the bus duct 100 according to the present invention may be provided with a cover member 50 that is mounted on a lower portion of the enclosure 10 to block exposure of the busbar 20 and the elastic contact member.

The cover member 50 may be provided to prevent dust from being introduced, and block the busbar 20 and the elastic contact member from being visually exposed.

The cover member 50 may have a structure that opens so that the connection opening 70 is exposed upon entry of the connecting conductor 330 of the branching box 300.

In this case, a pair of cover members 50 are disposed at a lower portion 35 of the insertion portion 30 of the insulating member 30 to block the connection opening 70, and the pair of cover members 50 may expand inward upon entry of the connecting conductor 330 of the branching box 300, allowing the connection opening 70 to be exposed.

Each cover member 50 may be made of a resin material, such as plastic, and be provided with at least one bendable node (reference numeral not illustrated) in the lengthwise direction to allow bending upon insertion of the connecting conductor 330 of the branching box 300.

Further, the connection opening 70 of the bus duct 100 into which the connecting conductor 330 of the branching box 300 is inserted may be provided in an entire area along the lengthwise direction of the bus duct 100.

That is, as illustrated in FIG. 4, when the cover member 50 is installed in the entire area under the bus duct 100, the connecting conductors 330 of the branching box 300 may enter between the pair of cover members 50 and bend the cover member 50 inward, when the branching box 300 is mounted at a required location.

The cover member 50 may be configured to be divided into a plurality of pieces in the lengthwise direction of the bus duct 100 so that only an area in which the branching box 300 is mounted expands by the connecting conductor 330.

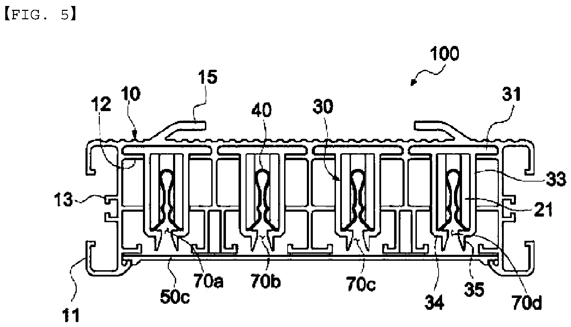

FIG. 5 illustrates a cross-sectional view of another embodiment of the bus duct 100, according to the present invention.

The bus duct 100 in the above-mentioned embodiment is configured in such a way that the cover member 50, which is a configuration for preventing exposure of the conductors 21 constituting the busbar 20 and the elastic contact member 40, is mounted in the entire area of the bus duct 100 in the lengthwise direction, so that the branching box 300 is mounted at any position.

However, the bus duct 100 illustrated in FIG. 5 is also provided with the cover member 50 to prevent exposure of the conductors 21 constituting the busbar 20 and the elastic contact member 40, but the cover member 50 in the embodiment illustrated in FIG. 5 is configured in the form of a plate.

Therefore, for mounting the branching box 300, the cover member 50 of the bus duct 100 at the mounting position of the branching box 300 among the plurality of bus ducts 100 connected through the connection kit 200 may be removed and the branching box 300 may be mounted.

The cover member 50 as described above may be configured in the form of a single piece of plate to cover the entire lower portion of one bus duct 100, or may be divided into a plurality of cover members 50 to cover the lower portion of one bus duct 100.

The bus duct as described above is installed in areas such as computer rooms. At locations where power branching is required, a branching box is mounted on the branching box connection surface of the bus duct, allowing power to be supplied to the necessary equipment using power demand facilities, power cables and the like.

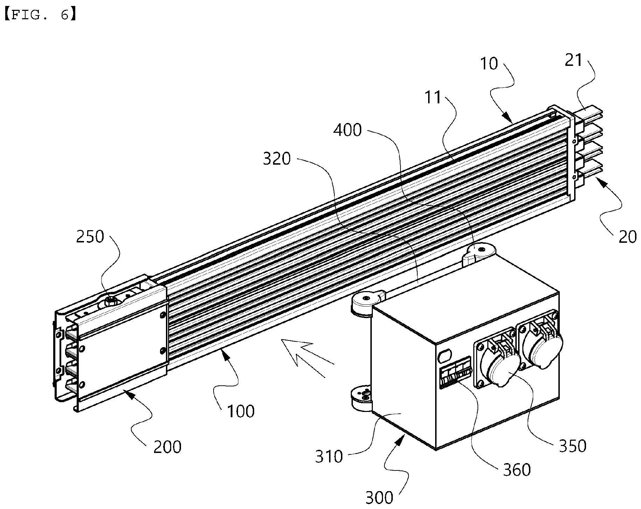

Depending on the relocation or new installation of power demand facilities such as data servers, the position of the branching box may frequently need to be changed or newly installed. The present invention provides a bus duct branching box that improves workability during this relocation or new installation of branching boxes by an operator and prevents safety accidents. Hereinafter, with reference to FIG. 6, the following is described.

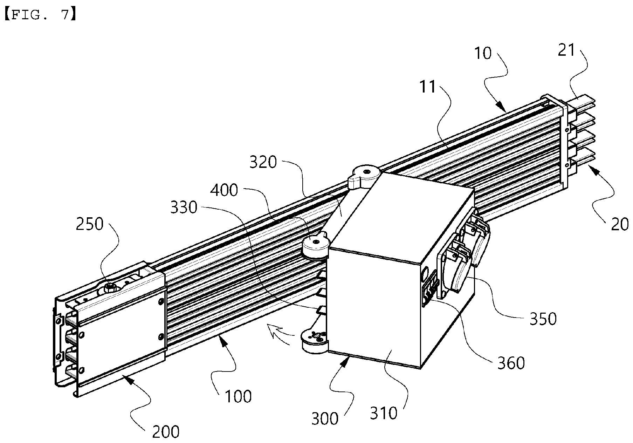

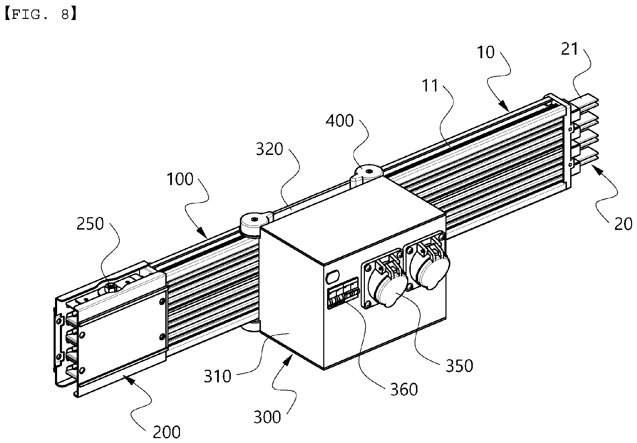

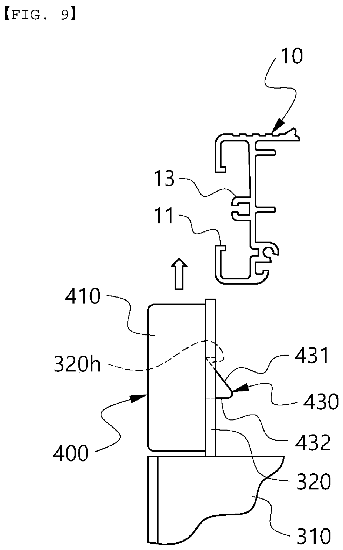

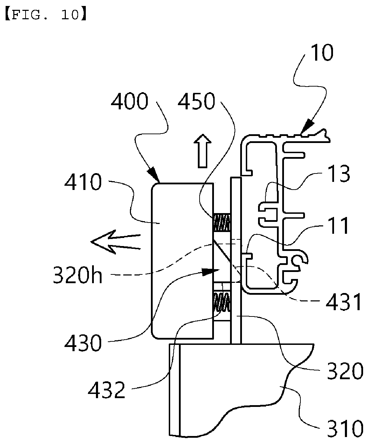

FIG. 6 illustrates a state immediately before a branching box is mounted on a bus duct mounting surface, according to the present invention, FIG. 7 illustrates a process in which a branching box is mounted to a bus duct mounting surface, according to the present invention, FIG. 8 illustrates a state in which a branching box has been completed mounted to a bus duct mounting surface, according to the present invention, and FIGS. 9 to 11 are side views of a sequential operational state of a locking unit in a process in which a branching box is mounted on a bus duct mounting surface, according to the present invention.

The bus duct branching box 300, according to the present invention, mounted to the bus duct, including the enclosure 10 provided with guide rails 11 on both sides, and a plurality of busbars, each having a pair of spaced apart conductors for supplying phase-based power, may be configured to include: a housing 310; a plurality of connecting conductors 330 exposed and mounted on a mounting surface of the housing 310 for insertion into the bus duct to be connected to each of the plurality of pairs of busbars; at least one plug connection unit 350 to which a plug of a power cable is mounted for branching power supplied through the connecting conductors 330 and supplying the power to power demand facilities; and a plurality of locking units 400 provided in the housing 310, which are capable of changing the branching box 300 to a state in which the branching box 300 is mountable to or detachable from the bus duct 100 through a rotational motion.

Transformers, AC/DC converters, and the like may be provided within the branching box 300.

As described above, the bus duct 100 according to the present invention may be installed on the ceiling or the like of a data server (DS) installation space of an Internet data center, and the branching box 300 may be installed according to the location of the data server (DS,) allowing the branching box 300 and the data server (DS) to be connected by a power cable provided with a plug. The branching box 300 may be provided with at least one plug connection unit 350 on which a plug of a power cable may be mounted. In the embodiment illustrated in FIGS. 6 to 8, the plug connection unit 350 is shown as being provided with two plug connection units, but the number of plug connection units 350 may be increased or decreased. In addition, the branching box may include a control panel 360 for overcurrent protection or system protection.

Therefore, in case where the expansion or relocation of a data server (DS) is required, the position of the branching box (300) may be adjusted to minimize the length of the power cables, allowing the system to be built.

The bus duct 100 of the present invention may be configured as a structure in which a mounting surface equipped with a plurality of connection openings (see reference numeral 70 in Fig. 4) is provided on one side, into which the connecting conductor 330 provided in the bus duct branching box 300 is inserted.

Therefore, when the branching box 300 is mounted to the bus duct, the mounting surface of the branching box 300 may be configured to be mounted.

A plurality of plate-shaped connecting conductors 330 or grounding conductors may be disposed protruding from the mounting surface of the housing 310, and may be inserted into the aforementioned connection openings to be connected or grounded.

In addition, the bus duct branching box 300 according to the present invention may be provided with a plurality of locking units 400. The locking unit 400 does not require a separate fastening member or work tool for mounting the branching box 300 to the bus duct. When the branching box 300 is mounted to the bus duct, the mounting may be completed by an operation of simply pushing the branching box 300 onto the bus duct.

The locking unit 400 is provided in the housing 310 of the branching box 300. The locking unit 400 may be provided in plural in a configuration for clamping the guide rails 11 configured in the form of a hook in the enclosure 10 provided in the bus duct, and may independently clamp the mounting sites.

The guide rail 11 provided in the enclosure 10 is configured to be installed in the lengthwise direction on the side of the bus duct and may be provided to mount the branching box or a support member for supporting the bus duct under various installation conditions. Inside the guide rail, a cable receiving portion 13 for accommodating cables for transmission of temperature sensing data or control data may be further provided.

The locking unit 400 is configured in an elongated plate form so that the locking unit 400 is mounted and may be mounted on a pair of partition wall portions 320 that are perpendicular to the mounting surface.

The partition wall portion 320 is provided perpendicular to the mounting surface of the bus duct, and a pair of partition wall portions 320 may be provided spaced apart parallel to the mounting surface of the housing 310 of the branching box 300.

A spacing distance of the parallel partition wall portions 320 may be configured to be a size corresponding to a width of the bus duct.

In the embodiment illustrated in FIGS. 6 to 8, the locking unit 400 is illustrated as being mounted to the branching box 300 with a total of four locking units, two on each partition wall portion 320, but depending on the size of the branching box 300, more than three may be provided on each partition wall portion 320.

As illustrated in FIGS. 9 to 11, the locking unit 400 may be configured in a cylindrical shape and may include a locking wheel 410 mounted on an outer surface of the partition wall portion 320, a locking member 430 mounted on an interior of the locking wheel 410, mounted to be advanceable into and retractable from a through hole 320h formed in the partition wall portion 320, and selectively hung in and fixed to an outer end of the guide rail 11 of the bus duct enclosure 10.

The locking member 430 is configured to be fixed to the locking wheel 410 and to be rotated with the locking wheel 410 upon rotation of the locking wheel 410, and the locking unit 400 may be mounted to the partition wall portion 320 such that the locking member 430 is elastically supported in a direction of an outer circumferential surface of the partition wall portion 320 via the elastic member 450.

Further, the through hole 320h is formed in the partition wall portion 320, and a locking member of the locking unit 400 may be mounted to pass through the through hole 320h.

Therefore, during the process of attaching or detaching the branching box 300 to or from the bus duct 100, when the locking member 430 is pressed by the guide rail 11 and an external force is applied to the outer end of the locking member 430, the locking member 430 and the locking wheel 410 fixed to the locking member 430 move simultaneously, allowing the locking wheel 410 to move away from the outer surface of the partition wall portion 320. When the external force applied to the outer end of the locking member 430 is removed, i.e., when the attachment or detachment of the branching box 300 to or from the bus duct 100 is completed, the locking wheel 410 and the locking member 430 may return to the inside of the outer surface of the partition wall portion 320 and through hole 320h by the elastic force of the elastic member.

The movement and return of the locking unit 400, which includes the locking member 430 and the locking wheel 410 fixed to the locking member 430, may be achieved by the elastic member 450. The elastic member 450 may be a spring with elastic force, but various configurations may be applied as the elastic member as long as the configurations enable the locking unit 400 to move and return to its original position.

Further, as illustrated in FIGS. 9 to 11, the outer end of the locking member 430 is provided with an inclined surface 431 inclined in a specific direction with respect to a rotation axis of the locking wheel 410. Depending on the direction of the inclined surface 431 at the outer end of the locking member 430 according to the rotation of the locking member 430, the locking member 430 may be selectively hung in and fixed to the outer end of the guide rail 11.

That is, the inclined surface 431 provided at the outer end of the locking member 430 may be configured to minimize interference or friction with the outer end of the guide rail 11 of the bus duct enclosure 10 during the process of attaching the branching box 300 to the bus duct or detaching the branching box 300 from the bus duct, and to move the locking member 430.

That is, as illustrated in FIGS. 6, 7, 9, and 10, in case of attempting to mount the branching box 300 to the mounting surface of the bus duct, when the inclined surface 431 of the locking member 430 provided in the locking unit 400 is allowed to be oriented towards the mounting direction, the inclined surface 431 may ride over the outer end of the guide rail 11, and the locking wheel 410 may move in the direction away from the partition wall portion 320.

Here, since the spacing distance of the partition wall portion 320 corresponds to the width of the bus duct, when the operator positions the bus duct inside the pair of partition wall portions 320, and presses or pushes the branching box 300 towards the mounting surface of the bus duct, the inclined surface 431 of each locking member 430 of the locking unit 400 may be mounted without catching on the enclosure 10 of the bus duct.

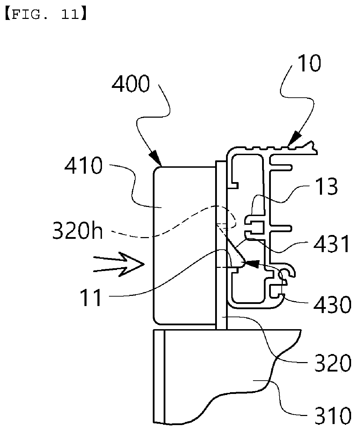

Further, as illustrated in FIGS. 8 and 11, once the insertion operation of the branching box 300 is completed, the locking member 430 may be hung in and fixed to the outer end of the guide rail 11 by an non-inclined surface 432 on the opposite side of the inclined surface 431.

In an embodiment of the present invention, the non-inclined surface 432 of the locking member 430 is depicted in a flat form. However, by forming a stepped portion to increase a contact area with the outer end of the guide rail 11, the hung-in and fixed state may be maintained more securely.

In this manner, the operator may position the bus duct between the partition wall portions 320 of the branching box 300, and by simply pushing or pressing the branching box 300 to the desired position on the connection surface of the bus duct without using any special tools, may complete the mounting operation of the bus duct. The use of additional fastening members is not required to maintain the mounted state.

In this manner, when mounting the branching box 300 to the bus duct, the operator may complete the mounting preparation by rotating the locking wheel 410 of the locking unit 400 so that the inclined surface 431 at the outer end of the locking member 430, which constitutes the locking unit 400, is oriented towards the mounting direction of the bus duct.

Furthermore, the outer circumferential surface at the outer end of the locking member 430, including the inclined surface 431, is entirely formed as a curved surface, which may minimize friction with the guide rail 11 and the like during rotation or during mounting and detachment.

An indicator 416 may be provided on the outer circumferential surface of the locking wheel 410 to identify whether the branching box 300 is in a state where the branching box 300 may be mounted to or detached from the bus duct 100. With the rotation of the locking wheel 410, the direction of the inclined surface 431 at the outer end of the locking member 430 changes. Depending on the direction of the inclined surface 431, it may be determined whether the branching box 300 is in a state where the branching box 300 may be mounted to or detached from the bus duct 100. The direction to which the indicator 416 provided on the locking wheel 410 is directed allows identification of the direction of the inclined surface 431. In the state where the branching box 300 may be mounted to or detached from the bus duct 100, the operator may easily mount or detach the branching box 300 to or from the bus duct 100 by simply pressing the branching box 300 towards the bus duct 100 or pulling the branching box 300 away from the bus duct 100, without using or operating any additional tools.

In the embodiment illustrated in FIGS. 6 to 8, the indicator 416 may be configured as a protrusion form, such as a projection form, on the outer circumferential surface of the locking wheel 410. However, as long as the indicator 416 is in a form that may be identified externally according to the displacement or rotation of the locking wheel 410, the shape thereof may vary.

In addition, the indicator may serve not only the purpose of identifying the direction of the inclined surface but also the purpose of preventing slippage between the operator's hand and the locking wheel during rotation, thereby providing an easier grip.

As illustrated in FIG. 11, in a state where the branching box 300 has been completely mounted, the inclined surface 431 of each locking unit 400 is disposed in a direction away from the outer end of the guide rail 11. Accordingly, in the state where the outer end of the guide rail 11 is hung in and fixed to the locking member 430, the locking wheel 410 and the locking member 430 of each locking unit 400 may be assembled such that the indicator 416 of the locking wheel 410 of each locking unit 400 are configured to face each other.

As described above, the operator may observe the direction of the indicator 416 of the locking unit 400 of the mounted branching box 300 to identify whether the branching box 300 is in a mountable state or whether the locking unit 400 is in a locked and fixed state. Therefore, the operator does not need to verify by other means whether the branching box 300 has been properly mounted.

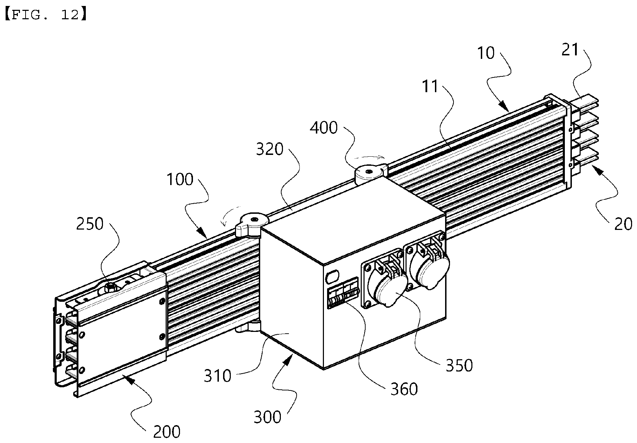

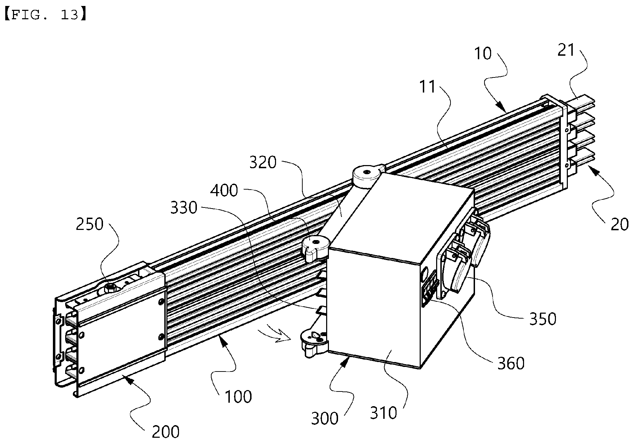

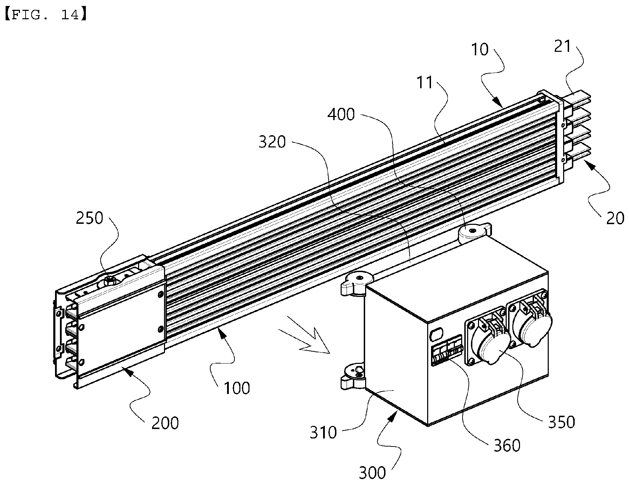

FIG. 12 illustrates a state in which the branching box 300 is detachable by rotating the locking unit 400 of the branching box 300 to detach the branching box 300 while the branching box is mounted on the bus duct mounting surface, according to the present invention, FIG. 13 illustrates a process in which the branching box 300 is detached from a bus duct mounting surface, according to the present invention, and FIG. 14 illustrates a state in which the branching box 300 has been completed disconnected from a bus duct mounting surface, according to the present invention.

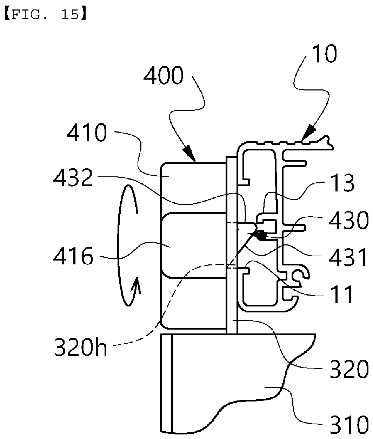

In addition, FIGS. 15 to 17 illustrate side views of an operational state of the locking unit 400 in a process in which the branching box 300 is detached from a bus duct mounting surface, according to the present invention.

The bus duct branching box 300 according to the present invention may allow the mounting and detachment of the branching box 300 using only the guide rail 11 provided on the bus duct and the rotational motion of the locking unit 400 that connects the guide rail 11 and the branching box 300, even when detaching the branching box 300 from the bus duct in a state in which the branching box 300 is mounted to the bus duct. This significantly improves the workability of installing, relocating, and detaching the branching box 300 for power branching of the bus duct.

In the locked and fixed state of the locking unit 400 illustrated in FIG. 8, even if the branching box 300 is pulled or drawn in the detachment direction from the connection surface of the bus duct, the outer end of the locking member 430 of each locking unit 400 is oriented such that its inclined surface 431 faces away from the outer end of the guide rail 11. In other words, the non-inclined surface 432 of the locking member 430 is oriented in a direction that faces the outer end of the guide rail 11, resulting in the non-inclined surface 432 on the opposite side of the inclined surface 431 of the locking member 430 and the outer end of the guide rail 11 being in a hung-in and fixed state.

Therefore, as illustrated in FIGS. 12 and 15, to detach the branching box 300, the operator may first perform the task of rotating the locking wheel 410 so that the inclined surface 431 at the outer end of each locking member 430 of the locking unit 400 is oriented in the direction that faces the outer end of the guide rail 11. In this case, the operator may identify that the branching box 300 is in a state where the branching box 300 may be detached from the bus duct 100 through the direction of the indicator 416 provided on the locking unit 400.

In this manner, once the preparation operation for detaching the branching box 300 has been completed, the operator, without using any special tools, may pull or draw the branching box 300, as illustrated in FIGS. 13, 14, 16, and 17, with the inclined surface 431 of the locking member 430 provided in the locking unit 400 disposed facing towards the detachment direction of the branching box 300. The inclined surface 431 may ride over the outer end of the guide rail 11, and the locking wheel 410 may move in the direction away from the partition wall portion 320, while simultaneously the locking member 430 fixed to the locking wheel 410 may also move and be displaced within the through hole 320h.

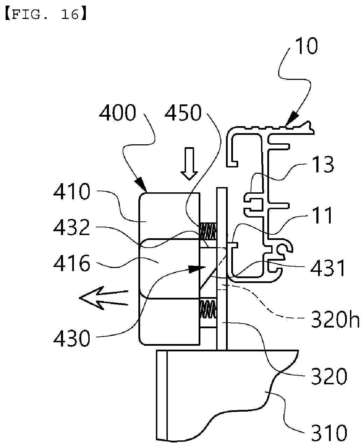

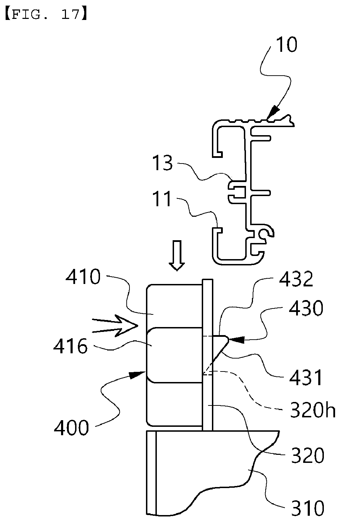

Further, as illustrated in FIGS. 16 and 17, once the inclined surface 431 at the outer end of the locking member 430 rides over the outer end of the guide rail 11 and the detachment of the branching box 300 has been completed, the locking member 430 and the locking wheel 410 may be displaced in the direction of the original outer surface of the partition wall portion 320 and/or in the direction of the through hole 320h of the partition wall portion 320 to return to their original position.

In the state where the detachment of the branching box 300 has been completed, when it is necessary to mount the branching box 300 at a new location, the operator may rotate the locking wheel 410 that constitutes the locking unit 400 in the opposite direction illustrated in FIG. 6 and repeat the mounting operation.

While the present invention has been described above with reference to the exemplary embodiments, it may be understood by those skilled in the art that the present invention may be variously modified and changed without departing from the spirit and scope of the present invention disclosed in the claims. Therefore, it should be understood that any modified embodiment that essentially includes the constituent elements of the claims of the present invention is included in the technical scope of the present invention.

## Claims

1. A bus duct branching box mounted on a bus duct, including an enclosure provided with guide rails on both sides and a plurality of busbars for supplying power, the bus duct branching box comprising:
a housing;
a plurality of connecting conductors each connected to the plurality of busbars and formed exposed on a mounting surface of the housing;
at least one plug connection unit configured to branch power supplied through the connecting conductors; and
a plurality of locking units provided to mount or detach the bus duct branching box to or from the bus duct, which are able to change the bus duct branching box to a state of being mountable to or detachable from the bus duct, and which are configured to operate to move while being pressed by the guide rails during a process of mounting or detaching the bus duct branching box to or from the bus duct and to be returned to an original position upon completion of mounting or detaching the bus duct branching box to or from the bus duct.

2. The bus duct branching box of claim 1, wherein the locking unit operates to move or be returned to an original position by an elastic member.

3. The bus duct branching box of claim 1, wherein the locking unit includes:
a locking wheel configured to change the bus duct branching box to a state of being mountable to or detachable from the bus duct through a rotational motion; and
a locking member formed on one side of the locking wheel and selectively hung in and fixed to an outer end of the guide rail of the bus duct enclosure.

4. The bus duct branching box of claim 3, wherein the locking unit includes an indicator through which the mountable state or the detachable state may be identified.

5. The bus duct branching box of claim 4, wherein the locking member is fixed to the locking wheel so as to be displaced or rotated along with the locking wheel when the locking wheel is displaced or rotated.

6. The bus duct branching box of claim 5, wherein the indicator is configured in the form of protruding from an outer circumferential surface of the locking wheel.

7. The bus duct branching box of claim 6, wherein a pair of partition walls to which the locking unit is mounted and which are formed perpendicular to the mounting surface of the housing are provided spaced apart parallel to each other.

8. The bus duct branching box of claim 7, wherein the mountable state or the detachable state is able to be identified depending on a direction of the indicator of the locking unit mounted on each partition wall of the pair of partition walls.

9. The bus duct branching box of claim 7, wherein the locking wheel is mounted on an outer circumferential surface of the partition wall, and
wherein the locking member is formed protruding from one side of the locking wheel and formed to be advanceable into and retractable from a through hole formed in the partition wall.

10. The bus duct branching box of claim 7, wherein a spacing distance of the pair of partition walls has a size corresponding to a width of the bus duct.

11. The bus duct branching box of claim 7, wherein the locking unit is mounted to the partition wall so as to be elastically supported in a direction of an outer circumferential surface of the partition wall via an elastic member.

12. The bus duct branching box of claim 11, wherein an inclined surface inclined in a specific direction with respect to a rotation axis of the locking wheel is provided at an outer end of the locking member, and
wherein the locking member is selectively hung in and fixed to an outer end of the guide rail depending on a direction of the inclined surface of the outer end of the locking member.

13. The bus duct branching box of claim 12, wherein an outer circumferential surface of the outer end of the locking member is configured to be curved surface.

14. The bus duct branching box of claim 12, wherein a state in which the bus duct branching box is hung in and fixed to the outer end of the guide rail is maintained in a state in which the inclined surface of the outer end of the locking member is disposed in a direction facing away from the outer end of the guide rail.

15. The bus duct branching box of claim 12 wherein the bus duct branching box is drawn downward in a state in which the inclined surface of the outer end of the locking member is disposed in a direction facing the outer end of the guide rail, the locking wheel moves in a direction away from an outer surface of the partition wall while the inclined surface of the outer end of the locking member is pressed by the outer end of the guide rail, and a state in which the locking member is hung in and fixed to the outer end of the guide rail is released so that the bus duct branching box is detachable from the bus duct.

16. The bus duct branching box of claim 1, wherein the connecting conductor is configured as a plurality of plate-shaped conductors formed to protrude parallel from the mounting surface of the housing that constitutes the bus duct branching box.

17. A bus duct branching box mounted on a bus duct, including an enclosure provided with guide rails on both sides and a plurality of busbars for supplying power, the bus duct branching box comprising:
a housing;
a plurality of connecting conductors each connected to the plurality of busbars and formed exposed on a mounting surface of the housing;
at least one plug connection unit configured to branch power supplied through the connecting conductors; and
a plurality of locking units configured to mount or detach the bus duct branching box to or from the bus duct,
wherein the plurality of locking units includes:
a locking wheel configured to change the bus duct branching box to a state of being mountable to or detachable from the bus duct through a rotational motion; and
a locking member formed on one side of the locking wheel and selectively hung in and fixed to an outer end of the guide rail of the bus duct enclosure.

18. A bus duct system comprising:
a bus duct provided with an enclosure having hook-shaped guide rails on both sides, a plurality of busbars for supplying phase-based power, and a connection surface on which a connection opening into which a plurality of connecting conductors are insertable is formed on one side of the enclosure; and
the bus duct branching box of any one of claims 1 to 17, attachably/detachably mounted to the connection surface of the bus duct.
